Europäisches Patentamt

European Patent Office

Office européen des brevets

(11) Publication number: **0 158 745**
**A1**

# (12) EUROPEAN PATENT APPLICATION

(21) Application number: **84200547.2**

(22) Date of filing: **17.04.84**

(51) Int. Cl.⁴: **G 01 F 1/20**
**G 01 F 1/78**

(43) Date of publication of application:
**23.10.85 Bulletin 85/43**

(84) Designated Contracting States:
**DE FR GB**

(71) Applicant: **THE DOW CHEMICAL COMPANY**
**2030 Dow Center Abbott Road P.O. Box 1967**
**Midland, MI 48640(US)**

(72) Inventor: **Campman, Keith Stanley**
**3430 East 76th Street**
**Tulsa Oklahoma 74136(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) Flow meter and densitometer apparatus and method of operation.

(57) The instrument disclosed herein is designed for measuring flow rates and densities of moving fluid streams, including liquids, gases, slurries, and fluids which contain solid materials. In one embodiment of this instrument, a conduit section, which has a 90 degree bend therein, is placed in a transfer line which carries the fluid stream to its use point. Defined within the conduit section is a chamber, which is located at the bend in the conduit. Installed within the chamber is a force measuring transducer and a piston, which is in contact with the diaphragm assembly of the transducer. In operation, a part of the moving fluid is diverted into the chamber, to equalize fluid pressure across the diaphragm assembly of the transducer and the piston. This removes the effect of fluid pressure on the flow rate and density measurement, and allows the moving fluid to displace the piston by the force exerted by the fluid. The transducer registers the force and transmits it to a computer, which converts it to a flow rate as a function of the force. A separate transducer measures the velocity of the stream and this measurement is converted to a density value.

Fig. 1

EP 0 158 745 A1

## FLOW METER AND DENSITOMETER
## APPARATUS AND METHOD OF OPERATION

The invention relates to an apparatus and method for measuring the flow rate and density of moving fluid streams. More specifically, the apparatus and method is designed to measure the force of a moving fluid stream, and to independently measure the velocity of the stream. From these values, the flow rate and density can be derived.

Many operations in the chemical industry, in the recovery of oil and gas from earth formations, and in other industrial processes, require measuring the flow rate and/or the density of a moving fluid stream. The usual fluid streams are liquids, gases, and slurries, or liquids and gases which contain solid materials. There are several different types of conventional instruments now available for measuring flow rates and densities of fluid streams.

Flow meters are generally classified as the "intrusive" type or "non-intrusive" type. In the operation of intrusive flow meters, certain components of the instrument are placed directly in the moving fluid stream, so that this part of the instrument is subjected to the erosive effect of the stream at all times. Conversely, the non-intrusive flow meters are instruments in which the flow measuring components are not inserted directly into the moving stream, so that the erosive effects of the stream are minimized.

A turbine flow meter is an example of a conventional intrusive-type flow meter. The turbine structure is an axially mounted rotor. The rotor is placed inside the pipeline which carries the fluid stream to be measured, so that the stream must pass directly through the rotor. This causes the rotor to turn and the rotor blades induce an AC current in the coil surrounding a permanent magnet in the pickup. The frequency of the AC signal is directly proportional to the liquid velocity. With proper calibration, the output frequency can be used for direct flow rate indication.

The instrument described above, as well as many other commercially available instruments, have certain drawbacks which make them impractical for measuring flow rates of moving fluids in many commercial operations. For example, in some oil well servicing operations, viscous liquids or slurry compositions are injected into the wellbore under high pressure and high velocity. The use of turbine flow meters in these operations has been generally unsatisfactory. For example, the rotor bearings often fail; but a more serious problem is that the space between the rotor and the rotor housing becomes clogged. When this happens, the entire rotor structure can either break loose from the rotor housing, and be

0158745

carried into the wellbore by the moving fluid, or it becomes seized (locked) in the housing and the moving slurry produces "worm-holes" in the housing wall until a serious failure occurs.

The apparatus or instrument of this invention has a distinct advantage over the prior devices in that none of the parts of the apparatus are inserted into the moving fluid stream which is being measured for flow rate, so that the apparatus is a non-intrusive flow meter. In addition, the apparatus is also capable of measuring the density of moving fluid streams, so that it can function both as a flow meter and a densitometer.

The apparatus of this invention is desiged for measuring the flow rate and density of moving fluid streams, such as liquids, gases, and liquids or gases which have solid materials suspended in the stream.

The invention resides in a flowmeter apparatus for measuring the flow rate of a fluid stream, the apparatus comprising:

a first conduit section for carrying a fluid stream from an inlet end, through the conduit section, and discharging the stream through an outlet end;

a housing defining a chamber within the first conduit section;

a fluid contact means positioned in the chamber and adapted for contacting the fluid stream as it flows through the first conduit section;

a force measuring means positioned in the chamber and in contact with said fluid contact means;

at least one compartment in said housing between the fluid contact means and the force measuring means;

a second conduit section in communication with the first conduit section and the compartment for diverting a portion of the fluid stream into said compartment; and wherein

the portion of the fluid stream diverted through the second conduit section into the compartment exerts a fluid pressure force in said compartment which is equal to the fluid pressure force of the fluid stream which flows through the first conduit section; and

the fluid stream which flows through the first conduit section exerts a force on the fluid contact means, said force being measured by the force measuring means; and

the flow rate of said fluid stream is derived as a function of the force.

With the effect of fluid pressure removed from the system, the force of the fluid stream is then exerted against the fluid contact means and thus picked up by the force measuring means. The flow rate of the moving fluid stream can then be derived as a function of the force. The apparatus also includes a separate means, such as an ultrasonic tranducer unit, for measuring the velocity of that part of the fluid stream which flows through the first conduit section. Preferably, the transducer device is installed on the outside of the first conduit section. The density of the flowing stream can then be derived as a function of the velocity.

Figure 1 is a side elevation view, partly in section and in schematic illustration, of one embodiment of a flow meter apparatus of this invention.

Figure 2 is a side elevation view, partly in section and in schematic illustration, of another embodiment of a flow meter apparatus.

Figure 3 is a fragmentary detail view of a separator means which separates the fluid being measured for flow rate from fluid in the pressure equalization conduit of the apparatus shown in the several embodiments illustrated herein.

Figure 4 is a side elevation view, partly in section and schematic illustration, of an apparatus which functions both as a flow meter and as a densitometer.

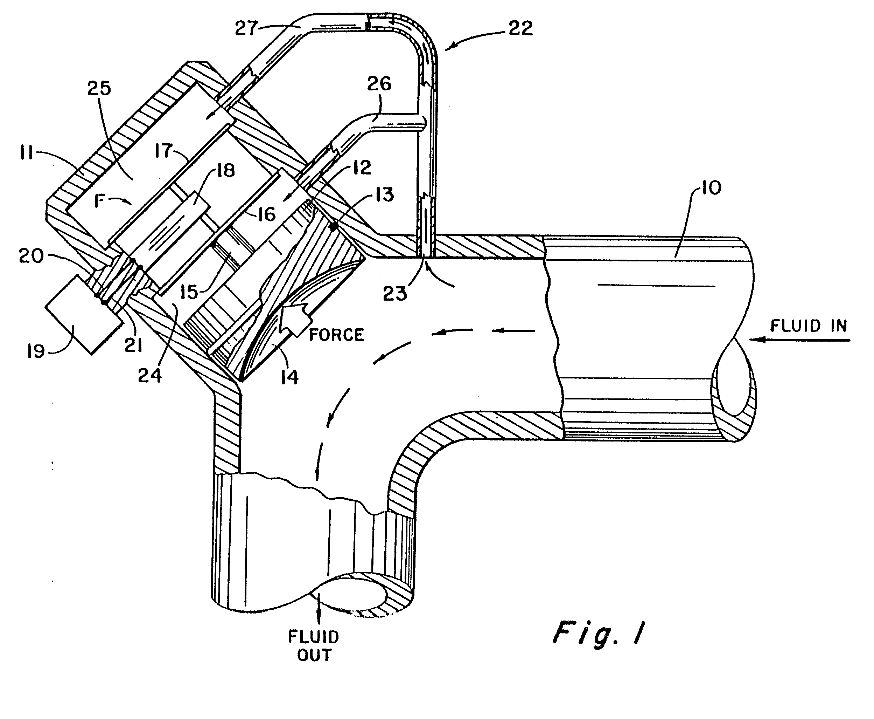

In the drawings, identical parts in each of the embodiments shown in Figures 1, 2, and 3, are identified with the same reference numerals, with letter suffixes being added to distinguish each of the figures.

Referring to the flow meter of Figure 1, numeral 10 indicates a section of a conduit. In practice, the usual procedure is to install the conduit section 10 in a pipeline (not shown), which carries a fluid composition from a source to a terminal point of use, or disposal.

The conduit section 10 has a 90 degree bend therein since the fluid being measured for flow rate generates a maximum force vector as it flows through a 90° bend. However, in actual practice, it is not critical to use a 90 degree bend in the conduit which may have any angle so long as the flow meter apparatus meets the other requirements described herein. The general rule to be applied in determining the angle in a conduit bend is that the force factor of the flowing stream will increase or decrease in direct proportion to the size or degree of the angle.

The conduit section 10 includes a housing 11, which is located at the bend in the conduit section. Inside the housing is a piston 12, which is designed to slide up or down within a chamber. The head of the piston 12 is provided with an O-ring seal 13 which prevents fluid which is flowing through the conduit section from by-passing the piston and leaking into the housing 11. The bottom surface of the piston head defines a face 14, which is in continuous contact with fluid flowing through the conduit section 10. The preferred configuration of face 14 is a hemispherical surface, as illustrated in Figure 1. However, this configuration is not critical to the practice of the invention. For example, the piston face may have other shapes, such as a concave, or flat face.

Piston 12 also includes a piston rod 15, which is secured at its bottom end to the top of the piston head. A means for measuring the force exerted by the fluid stream is positioned inside of housing 11. There are several conventional force measuring or displacement devices which may be used for this purpose, such as pressure force transducers, linear voltage displacement transducers, fiber optic units, and the like.

The force measuring device F which is schematically illustrated in Figure 1 is a conventional differential pressure transducer rather than units of pressure. The basic transducer, includes a bottom diaphragm 16 and a top diaphragm 17. Each diaphragm is fastened in the housing 11 by welding or any other suitable fastening means. The top end of the piston rod is a free end (that is, unattached) which is flush with the underside of the diaphragm 16. Positioned between each diaphragm is a cantilever beam sensor 18, which makes contact with both diaphragms. In turn, the beam sensor is connected to an electronic indicator 19, by electrical leads 20 and 21. The output from indicator 19 is transmitted to a computer (not shown).

The flow meter apparatus also includes a pressure equalization conduit section 22, for bringing the fluid pressure in the flow meter apparatus into equilibrium. A fluid inlet end 23 of conduit 22 opens into the larger conduit section 10 just ahead of the bend in the conduit section. Between the topside of piston 12 and the underside of diaphragm 16 is a space, which defines a lower compartment 24 in housing 11. The space between the topside of diaphragm 17 and the top end of housing 11 defines an upper compartment 25.

Above the fluid inlet 23 is a short leg 26 of conduit 22. Part of the fluid from conduit 10 is directed through the short leg into compartment 24. The remaining part of the fluid which enters conduit 22 is directed into compartment 25 through a long leg 27.

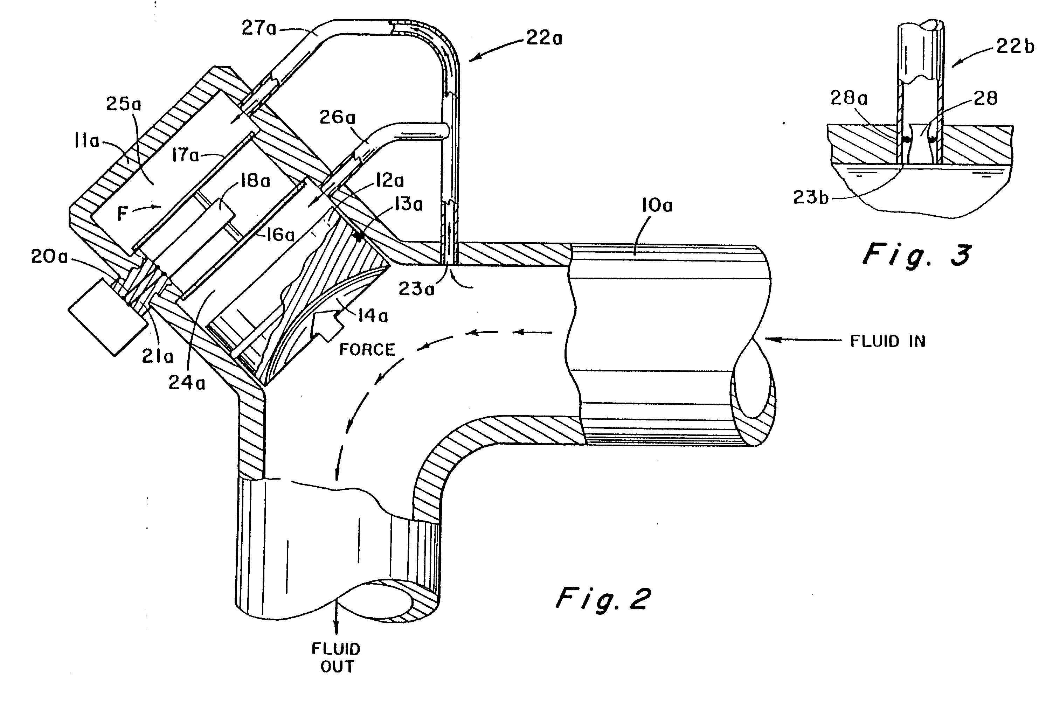

The flow meter device illustrated in Figure 2 is substantially identical to the flow meter device illustrated in Figure 1, except for a modification in the structure of piston 12a which does not include the piston rod (15) of Figure 1.

When it is desired to measure the flow rate of fluid streams which contain solids or corrosive materials, it is necessary to separate the stream flowing through the larger conduit 10 from the fluid in the pressure equalization conduit 22. This is done to prevent the corrosive materials in the stream from damaging the force measuring transducer unit and to prevent the solids from plugging off conduit 22. A separator means which may be used for this purpose is a small piston 28, as illustrated in Figure 3. An O-ring 28a is fitted to the piston, to prevent fluid from by-passing the piston. The first step in such an operation is to fill the conduit 22 with a "clean" fluid, that is, a fluid which does not contain solids or corrosive materials, or other contaminating substances. The piston and O-ring are then inserted into the inlet end 23 of conduit 22. Thereafter, as the fluid which contains the damaging materials flows through the larger conduit 10, it pushes the piston separator up into the conduit 22 only a short distance, that is, until the fluid pressure on both sides of the piston reaches equilibrium.

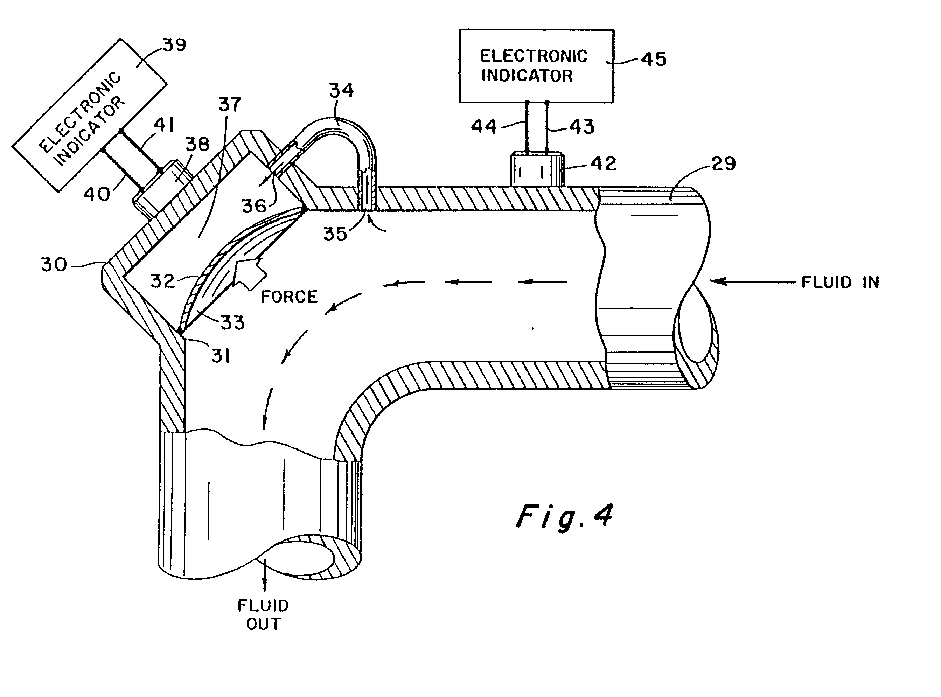

The apparatus illustrated in Figure 4 is designed to measure both the flow rate and density of a fluid stream. Although some of the parts in this view are similar to the parts shown in Figures 1 and 2, a different set of reference numerals are used. The

0158745

larger conduit section 29 of this apparatus, includes a housing 30 forming an internal chamber 37, which is located at the bend in the conduit section. A lip 31 is defined at the point where the inner wall surface of the housing 30 is joined with the inner wall surface of conduit section 29.

A thin plate 32 is fastened to the housing wall at the point where the lip is formed. The bottom surface of plate 32 defines a face 33 which is in continuous contact with fluid which flows through the conduit section 29. The preferred configuration for this face is a hemispherical surface, as shown; but it may have other shapes, such as a concave, or flat face. A second conduit section 34 with a fluid inlet end 35 opens into conduit 29. The opposite end of conduit section 34 is a fluid outlet end 36, which opens into the chamber or compartment 37, which is defined in housing 30 above plate 32.

A means 38 for measuring force exerted by a fluid stream moving through conduit 29 is positioned on the outside of housing 30. Any of the conventional force measuring, or displacement devices, such as the devices described earlier, may be used for this purpose. The force measuring device 38 preferably is an ultrasonic displacement transducer unit which is connected to an electronic indicater 39, by electrical leads 40 and 41. The output from indicator 39 is transmitted to a computer (not shown).

The present apparatus also includes a means for measuring the velocity of the fluid stream, as it moves through the conduit 29. Any of the various conventional devices designed for measuring velocity of

29,938A-F                    -9-

fluid streams may be used for this purpose, such as certain types of transducer units, non-intrusive flow meters, and the like. The velocity measuring device 42, which is illustrated schematically in Figure 4, preferably is an ultrasonic Doppler transducer unit. As shown in the drawing, the transducer 42 is mounted on the conduit section 29 upstream from the bend in the conduit. The transducer device is, in turn, connected by leads 43 and 44 to an electronic indicator 45. In practice, the output from indicator 45 is transmitted to a computer (not shown).

The present invention can be illustrated by describing certain operations in which the flow rate and density of moving fluid streams are measured. Typically, the apparatus is used to measure the flow rate of a fracturing slurry, which is usually a viscous liquid. Fracturing slurries are pumped into oil or gas wells, usually under high pressure, to initiate fracturing of earth formations and thus enhance recovery of the oil or gas.

Referring to Figure 1, the slurry composition is pumped into the fluid inlet end of the conduit section 10 from a pipeline (not shown) which is connected to a pump unit (not shown). After passing through the conduit section, the slurry is discharged through the fluid outlet into another pipeline (not shown) which carries it to the wellhead (not shown). As the slurry stream flows through the conduit section 10, a part of the fluid flows through the pressure equalization conduit 22 into the upper compartment 25 through the long leg 27, and through the shorter leg 26 into the lower compartment 24.

29,938A-F          -10-

When the compartments 24 and 25 are completely filled, the fluid pressure against the top diaphragm 17, the bottom diaphragm 16, and the top face of piston 12, is equal to the fluid pressure exerted against the inside wall of conduit 10 and the fluid contact face 14 of the piston. By equalizing the fluid pressure in this flow meter system, the effect of the pressure factor on the flow rate measurement is nullified or removed. This leaves the system in a condition such that the flow rate can be determined by first measuring the force generated by the moving fluid, and then calculating the flow rate as a function of the force.

During its flow through conduit 10, the fluid stream generates its maximum force vector as it rounds the 90 degree bend in the conduit. Accordingly, the force of the fluid, as it strikes against face 14 of piston 12, causes the piston to move upwardly in housing 11. In turn, the piston rod 15 deflects the diaphragm 16 against the arm of beam sensor 18. The pressure generated by the force on the piston is sensed by beam 18 and is picked up by strain gauges (not shown) attached to the beam. From the gauges, the force is transmitted as an electrical signal to the electrical indicator 19 and to a computer (not shown), which derives the flow rate as a function of the force. Derivation of the flow rate is based on the following equation:

$$R \sim K \sqrt{F}$$

where

R = flow rate;
K = diameter of the conduit;
F = force.

In the device of Figure 2, the upward movement of piston 12a, in response to the force of the moving fluid stream, compresses the fluid in compartment 24a against diaphragm 16a. The resulting force against the diaphragm is then sensed by the transducer unit F in the same manner as described for the device of Figure 1.

In the operation of the flow meter and densitometer apparatus of Figure 4, a part of the fluid stream which flows through conduit 29 is directed into compartment 37 through the pressure equalization conduit 34, to equalize the fluid pressure in the system. As the fluid stream passes through conduit 29, it strikes the concave face of plate 32 and the force of the stream deflects the place upwardly toward the top of chamber 30. The resulting displacement of place 32 is sensed by the ultrasonic transducer 38. The transducer signal is picked up by the electronic indicator 39 and carried to a computer (not shown), which derives the flow rate values.

Along with its capability for measuring the flow rate of a moving fluid stream, this apparatus is designed for simultaneously measuring the density of the moving stream. As the fluid in conduit 29 flows past the Doppler transducer 42, the transducer measures the velocity of the moving stream. In turn, the transducer signal is picked up by the electronic indicator 45 and transmitted to a computer (not shown). Using the velocity data, the computer is able to derive the density values according to the following equation:

$$F \sim d \times v_2 \times a$$

where

$F$ = force;

$d$ = density;

$v_2$ = velocity of the fluid stream;

$a$ = area of the conduit.

The plate 32 may be fabricated of any rigid, but flexible, material which is compatible with the fluids which are passed through the apparatus. Examples of suitable materials for this plate include stainless steel, non-ferrous metals, plastic resins, certain rubber compounds, and the like. The thickness of the plate will depend on the actual pressure force of the fluids which are passed through this device. For example, the plate should be capable of withstanding fluid pressures up to at least 1400 kg/cm$^2$ (20,000 psig) and flow rates up to 11.8 m$^3$/sec (25,000 SCFM).

# C L A I M S

1.  A flowmeter apparatus for measuring the flow rate of a fluid stream, the apparatus comprising:

a first conduit section for carrying a fluid stream from an inlet end, through the conduit section, and discharging the stream through an outlet end;

a housing defining a chamber within the first conduit section;

a fluid contact means positioned in the chamber and adapted for contacting the fluid stream as it flows through the first conduit section;

a force measuring means positioned in the chamber and in contact with said fluid contact means;

at least one compartment in said housing between the fluid contact means and the force measuring means;

a second conduit section in communication with the first conduit section and the compartment for diverting a portion of the fluid stream into said compartment; and wherein

the portion of the fluid stream diverted through the second conduit section into the compartment exerts a fluid pressure force in said compartment which is equal to the fluid pressure force of the fluid stream which flows through the first conduit section; and

the fluid stream which flows through the first conduit section exerts a force on the fluid contact means, said force being measured by the force measuring means; and

the flow rate of said fluid stream is then derived as a function of the force.

2. The apparatus of Claim 1, wherein said fluid contact means comprises

a piston member having a piston head and a rod secured to the head, the piston is slidably positioned within the chamber, and the piston head has a fluid contact face adapted for contacting the fluid stream which flows through the first conduit section;

said force measuring means being positioned in the chamber above the piston member;

said chamber including a first compartment defined between the piston and the force measuring means, and a second compartment defined within the chamber above the force measuring means;

said second conduit section communicating with the first conduit section and with the first and second compartments, and the second conduit section is adapted for diverting a portion of the fluid stream into each of said compartments as the fluid stream flows through the first conduit section; and wherein

the portion of the fluid stream which is diverted through the second conduit section into the first and second compartments, in the chamber, exerts a fluid pressure force in said compartments which is equal to the fluid pressure force of the portion of the fluid stream which flows through the first conduit section.

3. The apparatus of Claim 1 or 2 in which the conduit section is defined by an elbow section having a 90 degree bend therein, the chamber is located at the 90 degree bend, and the fluid contact means is located at the 90 degree bend.

4. The apparatus of Claim 3 in which the fluid contact means is defined by a hemispherical surface.

5. The apparatus of Claim 1 or 2 which further includes a fluid separator means, positioned in the second conduit section at the point at which the second conduit section communicates with the first conduit section.

6. The apparatus of Claim 1 or 2 in which the force measuring means is a differential pressure transducer unit.

7. The apparatus of Claim 6 in which the differential pressure transducer unit includes a first diaphragm member, which is adapted for contacting that portion of the fluid stream diverted into the first compartment, a second diaphragm member which is adapted for contacting that portion of the fluid stream diverted into the second compartment, and the piston rod has a free end which is in contact with the first diaphragm member.

8. The apparatus of Claim 2 in which the piston member is generally defined by a piston head, the piston head includes a first fluid contact face adapted for contacting that portion of the fluid stream which passes through the first conduit section, and a second fluid contact face adapted for contacting that portion of the fluid stream which is diverted into the first compartment.

9. The apparatus of Claim 2 in which the second conduit section and the first and second compartments of the chamber section are filled with a viscous fluid.

10.- A flowmeter apparatus, for measuring the flow rate of a fluid stream, the apparatus, comprising:

a first conduit section for carrying a fluid stream from an inlet end, through the conduit section, and discharging the stream through an outlet end;

a housing defining a chamber within the conduit section, said housing having a bottom lip portion in contact with the inside of the first conduit section;

a plate member fastened to the housing at the bottom lip portion thereof for separating the chamber from the inside of the first conduit section, said plate member having a fluid contact face adapted for contacting the fluid stream which flows through the first conduit section;

a force measuring means, operably associated with the chamber and positioned above the plate member;

a second conduit section in communication with the first conduit section and the chamber for diverting a portion of the fluid stream from the first conduit section to the chamber; and wherein

the fluid stream which is diverted through the second conduit section to the chamber exerts a fluid pressure force in said chamber which is equal to the fluid pressure force of the fluid stream which flows through the first conduit section; and

the fluid stream which flows through the first conduit section exerts a force on the plate member, said force being measured by the force measuring means; and

the flow rate of said fluid stream is derived as a function of said force.

11. The apparatus of Claim 10 in which the force measuring means is an ultrasonic displacement transducer unit.

12. The apparatus of Claim 10 in which the conduit section is defined by an elbow section having a 90 degree bend therein, the chamber section is located at the 90 degree bend, and the fluid contact face of the plate member is located at the 90 degree bend.

13. The apparatus of Claim 10 in which the fluid contact face of the plate member is defined by a hemispherical surface.

14. The apparatus of Claim 10 including means for measuring the velocity of the fluid stream which moves through the first conduit section, said velocity measuring means being attached to the first conduit section such that the density of the fluid stream can then be derived as a function of the velocity.

15. The apparatus of Claim 14 in which the velocity measuring means is an ultrasonic Doppler transducer unit.

16. A method for measuring the flow rate of a fluid stream, comprising the steps of:

flowing the fluid stream through a conduit section;

causing the fluid stream to contact a piston member which is slidable within a housing having a chamber defined within the conduit section;

diverting a first portion of the fluid stream into a first compartment located in the housing between the piston member and a force measuring means and diverting a second portion of the fluid stream into a second compartment located in the housing above the force measuring means, to thereby equalize the fluid pressure force in said compartments with the fluid pressure force in the conduit section;

moving the piston member into contact with the force measuring means, said movement being caused by the force generated by the fluid stream as it flows through the conduit section; and thereafter

deriving the flow rate of the fluid stream which flows through the condiut section, the flow rate being derived as a function of the force of said stream.

17. A method for measuring the flow rate of a fluid stream, comprising the steps of:

flowing the fluid stream through a conduit section;

causing the fluid stream to contact a plate member which is positioned crosswise to a housing forming a chamber within the conduit section;

diverting a portion of the fluid stream into a compartment defined in the housing above the plate member to equalize the fluid pressure force in said compartment with the fluid pressure force in the first conduit section;

29,938A-F                                  -19-

deflecting the plate member toward a force measuring means operably associated with the chamber said deflection being caused by the force of the fluid stream which flows through the conduit section;

transmitting said force through the fluid in said compartment and causing the force measuring means to record said force; and thereafter

deriving the flow rate of the fluid stream which flows through the conduit section, the flow rate being derived as a function of the force of said stream.

18. The method of Claim 16 or 17 which further includes the steps of:

attaching to the first conduit section a means for measuring the velocity of a moving fluid stream;

recording the velocity of the fluid stream which moves through the conduit section; and thereafter

deriving the density of said fluid stream, as a function of the velocity of said stream.

19. The method of Claim 16 or 17 in which the fluid stream is a liquid phase substance.

20. The method of Claim 16 or 17 in which the fluid stream is a vapor phase substance.

21. The method of Claim 16 or 17 in which the fluid stream is a vapor phase substance which contains solid matter.

FLUID IN

FLUID OUT

FORCE

Fig. 1

Fig. 2

Fig. 3

Fig.4

0158745

### European Patent Office

## EUROPEAN SEARCH REPORT

EP  84 20 0547

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-2 826 915  (LIBMAN et al.)<br><br>* Figures; column 1, line 56 - column 2, line 41 * | 1-6,8, 10,12, 13,19- 21 | G 01 F    1/20<br>G 01 F    1/78 |
| A | DE-A-2 607 863  (GRUNERT)<br><br>* Figures; page 3, paragraph 2 * | 1-8,10 ,12-14 ,16-21 | |
| A | US-A-3 067 611  (BOWERS et al.)<br>* Figures * | 1 | |
| A | US-A-2 897 672  (GLASBRENNER et al.)<br>* Figures * | 1 | |
| A | US-A-3 538 769  (KAMEKICKI SHIBA)<br>* Figures * | 1 | |

TECHNICAL FIELDS SEARCHED (Int. Cl.4)

G 01 F

The present search report has been drawn up for all claims

| Place of search | Date of completion of the search | Examiner |
|---|---|---|
| THE HAGUE | 19-12-1984 | NUIJTEN E.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82